# EUROPEAN PATENT APPLICATION

(11) **EP 2 634 977 A1**
(43) Date of publication of application: **04.09.2013**
(21) Application number: 11835957.9
(22) Date of filing: 12.09.2011
(51) Int. Cl.: H04L 12/56, H04L 12/28

(54) **NETWORK SYSTEM AND METHOD FOR CONTROLLING COMMUNICATION TRAFFIC**

(30) Priority: 28.10.2010 JP 2010242248
(71) Applicant: NEC Corporation, Tokyo 108-8001 (JP)
(72) Inventor: SATO Shihomi, Tokyo 108-8001 (JP)
(74) Representative: Reeve, Nicholas Edward
(86) International application number: PCT/JP2011/070726
(87) International publication number: WO 2012/056816

(57) **Abstract**

When a traffic storm has occurred in an open flow network, a frame of a cause is dropped in a flow unit without carrying out the indiscriminate drop of the frame and the down of the port. Specifically, a controller detects increase of the traffic in a short time from the statistic data regularly acquired from each of the switches under the control of it. The controller starts a storm detection mode upon the detection. In the storm detection mode, packets are extracted randomly from the switch for a predetermined time period, as a sample packet. The controller determines which of a broadcast storm, a multicast storm and a unicast storms has occurred, based on the sample packets. The controller determines that the traffic storm has occurred, when any of them has occurred. When the traffic storm has occurred, the controller sets an entry defining a rule (match condition) showing the packet which is a cause of the storm and an action in which it is written that the packet is dropped, to a port of the switch based on data of the analyzed sample packets by using a "FlowMod" message.

## Description

### Technical Field

The present invention relates to a network system, and more particularly a network system which controls a traffic storm caused in an open flow (OpenFlow) compatible device.

### Background Art

As one of routing control techniques in the network communication, a routing control technique which uses the open flow (OpenFlow) technique as a control protocol of a transmitter is studied. The details of the open flow technique will be described in Non-Patent Literatures 1 and 2. A network in which the routing control is carried out based on the open flow technique is called an open flow network.

In the open flow network, a controller such as an OFC (OpenFlow controller) controls the behavior of each of switches by manipulating flow tables of the switches such as an OFS (OpenFlow switch). The controller and the switch are connected by a secure channel which is used for the controller to control the switch by using a control message conformed to the open flow protocol.

The switches in the open flow network form an open flow network and are edge switches and core switches under the control of the controller. A series of steps for a packet from the reception of the packet (communication data) by an input side edge switch to the transmission of the packet from an output side edge switch in the open flow network are called a flow.

The flow table is a table in which a flow entry is registered which defines a predetermined action (processing content) to be performed to a packet group (packet sequence) which conforms to a predetermined rule (match condition).

The rule of the flow entry is defined and identified based on a combination of any or all of a destination address which is contained in a header region for each protocol layer of the packet, a source address, a destination port), and a source port. It should be noted that the above addresses contain a MAC address (Media Access Control Address) and an IP address (Internet Protocol Address). Also, in addition to the above, the data of an ingress port may be used as a rule of the flow entry.

The action of the flow entry shows operations such as "outputting to a specific port", "dropping", and "rewriting a header". For example, if identification data of an output port (output port number and so on) is shown in the action of the flow entry, the switch outputs a packet to a port corresponding to the identification data, and if the identification data of the output port is not shown, the switch drops or discards the packet. Or, if the header data is shown in the action of the flow entry, the switch rewrites the header of the packet based on the header data.

The switch in the open flow network carries out the action of the flow entry to the packet group which conforms with the rule of the flow entry registered on the flow table.

Generally, in the networks such as a mesh (lattice, or reticulation)-type topology, there is a possibility that a route configures a loop.

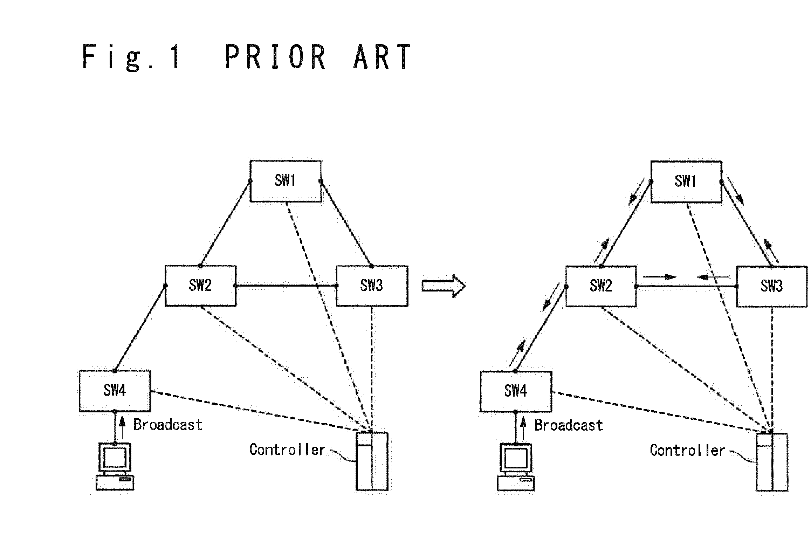

For example, as shown in FIG. 1, if a routing control is erroneously carried out in the networks of the mesh-type topology, a loop is formed when the packets (or frames) are transmitted by a broadcast, and multiplies more so that a band is oppressed to have influence to the communication. It should be noted that the frame is a transmission unit of the communication data in the data link layer of the OSI Reference Model. The packet is a transmission unit of the communication data in the network layer of the OSI Reference Model.

As a conventional technique to solve the above-mentioned problem, a technique is known in which the frames exceeding a threshold value are dropped when the broadcast frame reached the threshold value, or a corresponding port is downed,

However, when the above-mentioned technique is applied to the open flow network, there is a possibility that the frames to be transferred originally are dropped or the port is downed, so that the frames are not transferred.

As a related technique, a communication control method and a communication device which uses the method are disclosed Patent Literature 1 (JP 2006-352263A). In this related technique, a communication control method of recovering a communication failure of the packet loop caused because of erroneous connection in an L2 level of the relay switch in a communication system which transmits and receives data between a plurality of end hosts connected with a relay switch in a subnet, includes contentiously transmitting the packets by using a MAC address other than the source MAC address of one end host to be subjected to the communication, stopping the packet loop through this, and transmitting packet data by using the MAC address of a destination end host as the destination MAC address.

Also, a LAN (Local Area Network) switch is disclosed in Patent Literature 2 (JP H11-112544A). In this related technique, a LAN switch having a virtual LAN (VLAN) function in a switch unit is provided with a VLAN multicast frame counting section and a reception frame discarding section. The VLAN multicast frame counting section can set a VLAN limiter flag of the VLAN when there is a VLAN broadcast multicast counter in which a value every unit time is a predetermined threshold value or more. The reception frame discarding section discards a reception frame when the destination address of the reception frame is a broadcast address or a multicast address, and the reception frame corresponds to the VLAN for which the VLAN limiter flag has been set.

### Citation List

[Patent Literature 1] JP 2006-352263A
[Patent Literature 2] JP H11-112544A
[Non-Patent Literature 1] "The OpenFlow switch Consortium", [online] (URL: http://www.openflowswitch.org/)
[Non-Patent Literature 2] "OpenFlow switch Specification, Version 1.0.0", [online] December 31, 2009, (URL: http://www.openflowswitch.org/documents/openflow-spec-v1.0.0.pdf)

### Summary of the Invention

In the routing environment with a high degree of freedom like the open flow (OpenFlow) network, there is a possibility that a person who builds a network erroneously sets the routing.

Because a route for every flow is selected based on a combination of various keys, it is easy to form a loop through the setting in the open flow network. For this reason, there is a possibility that a loop is formed unintentionally through the erroneous setting of the routing.

In an open flow network which has a loop, when a traffic storm (which of a broadcast storm, a multicast storm and a unicast storm) has occurred, there is a possibility that a packet (or a frame) which should not be discarded originally is dropped or the drop influences on another communication through the down of a port itself, if the solution is attempted by using a conventional technique.

An object of the present invention is to provide a network system in which a packet of a cause is dropped in a flow unit, when a traffic storm has occurred in an open flow network, and to avoid the indiscriminate dropping of the packet and the down of a port itself.

The network system according to the present invention includes a switch configured to transfer a packet based on an entry registered on a flow table therein; and a controller configured to set to said switch, a drop entry defining a match condition to specify the packet and an action to drop the packet, when it is determined that a sampled packet is a cause of a traffic storm, as a result of packet sampling to the switch. The switch drops the packet as the cause in a flow unit based on the drop entry when the traffic storm has occurred.

In a communication traffic controlling method, packets are transferred based on an entry registered on a flow table therein. Also, a drop entry defining a match condition to specify the packet and an action to drop the packet is set to said switch, when it is determined in a controller that a sampled packet is a cause of a traffic storm, as a result of packet sampling to the switch. Also, the packet as the cause is dropped in a flow unit based on the drop entry when the traffic storm has occurred.

A program according to the present invention is a program to make a computer execute a process as the controller in the above-mentioned communication traffic controlling method. It should be noted that the program according to the present invention may be stored in a storage unit and a storage medium.

The packet is not subjected to the loop in the open flow control even in the loop environment, by maintaining UP (connection condition) of the port and when the normally transferred packets exist, the loop does not influence those packets.

### Brief Description of the Drawings

FIG. 1 is a diagram showing a problem in a conventional network system;
FIG. 2 is a diagram showing a configuration example of a network system according to the present invention;
FIG. 3 is a diagram showing an exemplary embodiment of the network system according to the present invention;
FIG. 4A is a flow chart showing an operation of the network system according to the present invention;
FIG. 4B is a flow chart showing the operation of the network system according to the present invention; and
FIG. 5 is a diagram showing a configuration example of a controller according to the present invention.

### Description of Exemplified Embodiments

### [Exemplary Embodiments]

Hereinafter, embodiments of the present invention will be described with reference to the attached drawings.

### (System configuration)

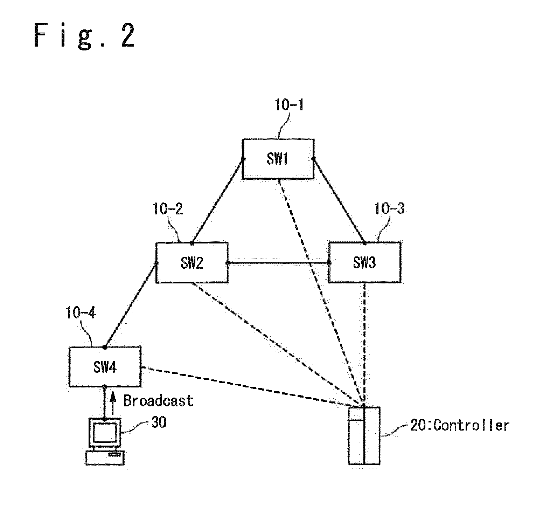

As shown in FIG. 2, the network system according to the present invention contains switches (SW) 10 (10-i, i=1-n: n is the number of switches), a controller 20 and a terminal 30.

The switches 10 (10-i, i=1-n) and the controller 20 form an open flow network. The switches 10 (10-i, i=1-n) are nodes in the open flow network.

The switch 10 (10-i, i=1-n) has a flow table therein and transfers a packet according to an entry registered on the flow table.

Also, the switch 10 (10-i, i=1-n) notifies statistic data of the transfer packet to the controller 20 regularly.

The switch 10 (10-i, i=1-n) calculates the statistic data in a protocol (TCP, UDP, ICMP and so on) unit or in an action unit every port and retains it as the statistic data. The statistics of the transmission and reception of messages between the controller 20 and the switch 10 (10-i, i=1-n) is the statistic data. Between the controller 20 and the switch 10 (10-i, i=1-n), communication is carried out by using a message prescribed in the open flow protocol. Hereinafter, the message prescribed in the open flow protocol is called an open flow protocol message.

Also, when a traffic storm (any of a broadcast storm, a multicast storm and a unicast storm) occurs in the open flow (OpenFlow) network, the switch 10 (10-i, i=1-n) drops or discards a packet (or a frame) as a cause in a flow unit and does not carry out the indiscriminate drop of the packets and the down of a port. It should be noted thin the unicast storm is a storm of a packet corresponding to an entry unregistered in the flow table.

Here, the switch 10-1 (SM1), the switch 10-2 (SW2), the switch 10-3 (SW3) and the switch 10-4 (SW4) are shown as the switch 10 (10-i, i=1-4).

The controller 20 regularly acquires the statistic data of transfer packets from each of the switches 10 (10-i, i=1-n) under the control and detects increase of the traffic in a short time from the statistic data.

Also, the controller 20 starts a storm detection mode when detecting the increase of traffic. The controller 20 extracts the packets which are randomly transferred from the switch 10 for a predetermined period in the storm detection mode. Here, a randomly extracted packet is called a sample packet. Thin is, the controller 20 carries out packet sampling in the storm detection mode.

Also, the controller 20 determines from this sample packet whether or not an enormous amount of packets forwarded to the switch 10 are related to the traffic storm.

Also, when the packet is in the traffic storm, the controller 20 sets for a port of the switch 10 by a "FlowMod" message, an entry in which a match condition to specify a packet which causes the storm from the data of the analyzed sample packet and an action to drop the packet are defined.

It should be noted that the "FlowMod" message is one of open flow (OpenFlow) protocol messages and is a message to register and change the entry on the flow table of the switch from the controller. That is, the controller 20 registers and changes the entry on the flow table of the switch 20 by transmitting the "FlowMod" message for the switch 20.

The terminal 30 is connected with any of the switches 10 (10-i, i=1-n) and transmits an ARP (Address Resolution Protocol) packet which causes the traffic storm into the open flow network. That is, the terminal 30 carries out flooding and so on of the packets to the open flow network.

### (Exemplified hardware)

As an example of the switch 10 (10-i, i=1-n), an open flow the switch is supposed. As an example of the open flow switch, a network switch, a multi-layer switch, and so on are thought of. The multi-layer switch is classified minutely every layer of the OSI Reference Model to be supported. As a main classification, there are a layer 3 switch which reads data on the network layer (a third layer), a layer 4 switch which reads data on the transport layer (a fourth layer), a layer 7 switch (an application switch) which reads data on the application layer (a seventh layer). It should be noted that in the open flow network, relay units such as a general router and a switching hub can be used as the open flow switches. Also, the switch 10 (10-i, i=1-n) may be a virtual switch built on a physical machine. Also, as a substitution example of the switch 10 (10-i, i=1-n), a router, a proxy, a gateway, a firewall, a load balancer (a load distribution device), a band control unit (packet shaper), a security monitor and control (SCADA: Supervisory Control And Data Acquisition), a gatekeeper, a base station, an access point (AP), A telecommunication satellite (CS) and a computer having a plurality of communication ports are thought of.

As an example of the controller 20, computers such as a PC (a personal computer), appliance (appliance), a work station, a mainframe, and a supercomputer are supposed. Also, the controller 20 may be a virtual machine (VM) built on the physical machine.

As an example of the terminal 30, the above-mentioned computer, and a portable telephone, a car navigation system, a carrying-type game machine, a home game machine, a gadget bag (electrical and electric device), an Interactive TV, a digital tuner, a digital recorder, an information home electronics (information home appliance), an OA (Office Automation) device and so on are thought of. The terminal 30 may be loaded into the mobile vehicle such as a vehicle, a shipping, and an aircraft.

As an example of each of the switches 10 (10-i, i=1-n), a network connecting the controller 20 and the terminal 30, and a LAN (Local Area Network) are supposed. As another example, the Internet, a wireless LAN, a WAN (Wide Area Network), a backbone (Backbone), a community antenna television system (CATV) circuit, a fixation telephone network, a carrying telephone network, WiMAX (IEEE 802.16a), 3G (3rd Generation), a leased circuit, IrDA (Infrared Data Association), a Bluetooth (registered trademark), a serial communication circuit, a data bus and so on are thought of.

Although being not illustrated, each of the switch 10 (10-i, i=1-n), the controller 20 and the terminal 30 are realized by a processor which operates based on a program to carry out given processing, a memory which stores the program and data of all kinds and an interface (I/F) for communication.

As the example of above-mentioned processor, a CPU (Central Processing Unit), Microprocessor (microprocessor), the microcontroller or the semiconductor integrated circuit (Integrated Circuit (IC)) and so on, which have a function of the exclusive use are thought of.

As an example of the above-mentioned memory, semiconductor memory devices such as a RAM (Random Access Memory), a ROM (Read Only Memory), an EEPROM (Electrically Erasable and Programmable Read Only Memory) and a flash memory, auxiliary memory units such as HDD (Hard Disk Drive) and SSD (Solid State Drive), removable discs such as a DVD (Digital Versatile Disk), a storage medium (media) such as an SD memory card (Secure Digital memory card) and so on are thought of. Or, storage units using a DAS (Direct Attached Storage), a FC-SAN (Fibre Channel - Storage Area Network), a NAS (Network Attached Storage), an IP-SAN (IP - Storage Area Network), and so on may be used.

As an example of the above-mentioned interface for the communication a substrate (motherboard, and I/O board) and a semiconductor integrated circuit such as a chip corresponding to the network communication, a network adapter such as an NIC (Network Interface Card) and, communication units such as a similar extension card and an antenna, and communication ports such as a connection end (connector) are thought of.

However, the present invention is not limited to these examples.

### (Implementation example)

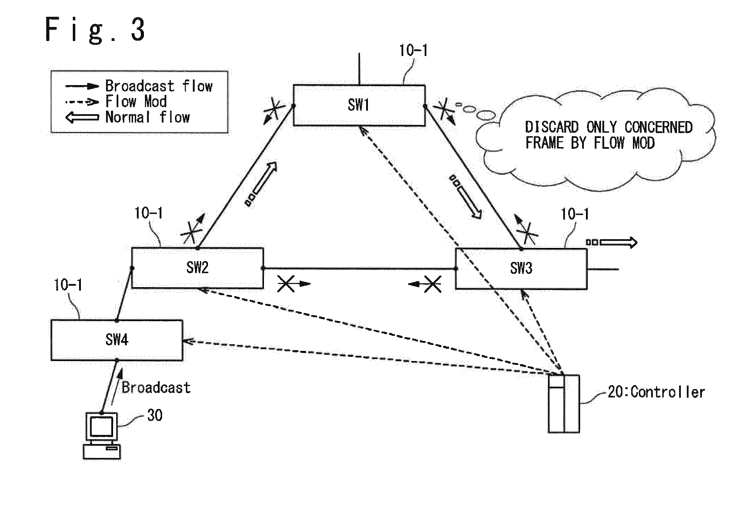

A network configuration in which a loop is configured by the switch 10-1 (SW1), the switch 10-2 (SW2) and the switch 10-3 (SW3) will be described as an example as shown in FIG. 3.

As shown in FIG. 3, in this network configuration, the terminal 30 is connected with the switch 10-4 (SW4) and the switch 10-4 (SW4) is connected with the switch 10-2 (SW2).

Also, in this network configuration, the controller 20 is connected to each of the switches 10 (10-i, i=1-n) by a secure channel to control each switch 10.

In this condition, the terminal 30 transmits the ARP packet which causes the traffic storm.

### (Basic operation)

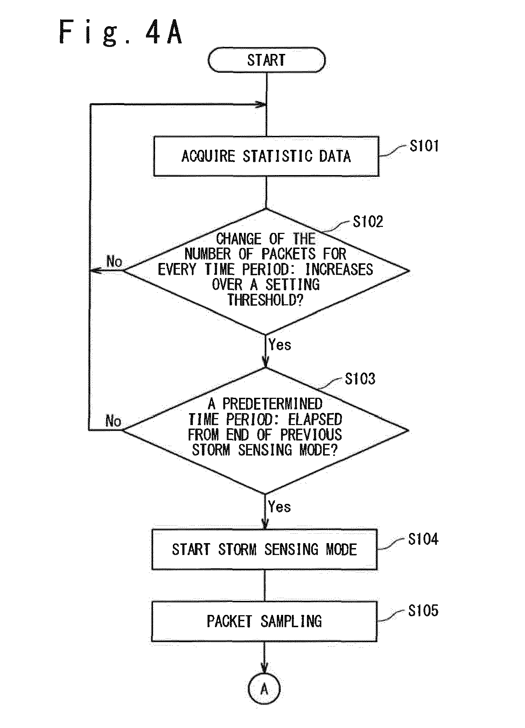

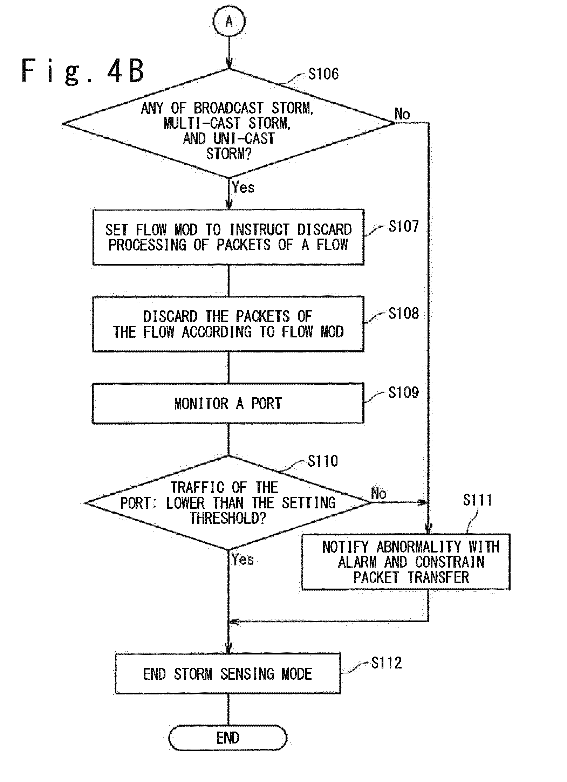

Referring to FIGS. 4A and 4B, an operation of each unit of the network system according to the present invention will be described.

### (1) Step S101

The controller 20 acquires the statistic data for every port of the switch 10 as each control target in a constant interval (regularly). For example, the controller 20 can acquire the statistic data of the switch 10 by transmitting a predetermined open flow protocol message to the switch 10 of each controlled system. The controller 20 can select by a statistic data request message to acquire the statistic data selected an extent, in addition to the statistic data of the whole switch 10. The switch 10 notifies the statistic data to the controller 20 in response to the statistic data request message from the controller 20. As elements of the statistic data, identification data of the statistic data (time zone in which the statistic data was acquired, and so on), switch identification data (IP address and so on), port identification data (port number and so on), match condition (packet identification data), the number of packets (packet outflow/inflow), the number of bytes (data size), the protocol of a packet sent and received, an executed action and so on are thought of. The switch identification data and the port identification data may be contained in the match condition. However, actually, the present invention is not limited to these examples.

### (2) Step S102

When the traffic storm occurs in the switch 10 of the control target, the controller 20 determines whether a difference of a transfer packet count every time (per constant period/unit time) exceeds a setting threshold value and whether or not the packet count increase monotonously linearly, from the statistic data of the port of the storm occurring switch. Here, the controller 20 counts the number of packets and determines whether or not the difference between the current number of packets and the previous number of packets increases beyond the setting threshold value.

### (3) Step S103

When the difference between the current number of packets and the previous number of packets increases beyond a setting threshold value, the controller 20 determines whether a predetermined time (e.g. 1 hour) passes from the end of the storm detection mode previously set.

### (4) Step S104

The controller 20 starts a storm detection mode when the predetermined time passes from the end time of the storm detection mode previously set.

### (5) Step S105

The controller 20 carries out packet sampling by requesting the switch 10 to transfer a copy (a sample packet) of a packet which is randomly selected, to the controller 20. The controller 20 detects the ARP packet in a high probability through this packet sampling.

### (6) Step S106

The controller 20 determines the broadcast storm, the multicast storm, or the unicast storm from the result of the packet sampling. Here, the controller 20 specifies that a storm is caused in the traffic because of the broadcast storm of the ARP packet, from the result of the packet sampling.

### (7) Step S107

### The controller 20

Based on the information of this ARP packet, "the discard processing (Drop Action)" sets defined entry to the corresponding port of corresponding the switch 10 by the "FlowMod" message as the given processing (the action) to this ARP packet.

### (8) Step S108

The switch 10 registers an entry in which a "drop action" is defined, on the flow table as predetermined processing (action) to this ARP packet in response to the content of this "FlowMod" message, and drops the ARP packet corresponding to the match condition (rule) of the entry without transferring it. Therefore, only the ARP packet is extinguished and the network returns from the broadcast storm.

### (9) Step S109

The controller 20 monitors the port of the switch 10 for a predetermined period, since transmitting "FlowMod" message to the switch 10.

### (10) Step S110

The controller 20 determines whether or not the number of transfer packets every predetermined time or in a queue of the switch 10 underruns the setting threshold value.

### (11) Step S111

The controller 20 notifies an alarm to a predetermined destination alarm (Alarm), when the condition is neither of the broadcast storm, the multicast storm, or the unicast storm, or when the number of transfer packets in the queue of the switch 10 or ever predetermined time is more than the setting threshold value. Also, the controller 20 carries out a routing control to limit the packet transfer by the switch 10. For example, the controller 20 sets a route which passes through another switch 10, while avoiding the switch 10 to the switches 10 on the route and limits the packet transfer by the switch 10.

### (12) Step S112

The controller 20 determines that the traffic storm has been revoked when the number of transfer packets in the queue of the switch 10 or ever predetermined time underruns the setting threshold value, and ends the storm detection mode.

It should be noted that the entry registered by the "FlowMod" message (the "FlowMod" message in which "the drop action" is specified) may be deleted from the flow table of the switch 10, when the controller 20 determines that the traffic storm is revoked to end the storm detection mode.

The present invention is effective in a loop configuration other than the above-mentioned network configuration or in the network load (multicast/unicast storm) due to the increase of the traffic which is not to limit to the broadcast.

Moreover, in order to manipulate a storm target packet by the "FlowMod" message, the content of the action is not limited to the drop and a supervisor of the network can select an action. For example, the content in which the storm target packet is transferred to the specific switch may be defined in the "FlowMod" message.

### (Configuration of controller)

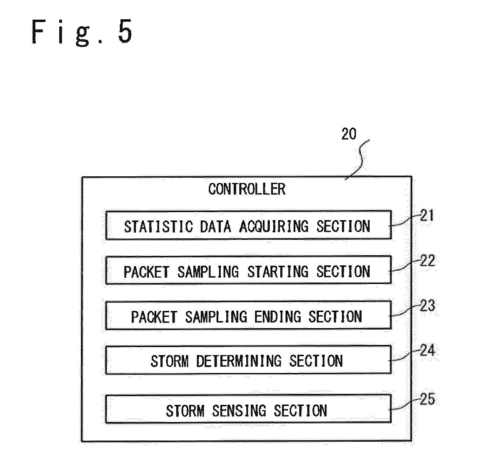

Referring to FIG. 5, the details of the configuration of the controller 20 will be described.

The controller 20 is provided with a statistic data acquiring section 21, a packet sampling starting section 22, a packet sampling ending section 23, a storm determining section 24 and a storm sensing section 25.

The statistic data acquisition section 21 acquires the statistic data of the transfer packets regularly from the switch 10.

The packet sampling starting section 22 starts packet sampling to the switch 10 if a predetermined time passes away from the end of the previous packet sampling, when it is detected from the statistic data that the increment of the transfer packets exceeds the setting threshold value.

The packet sampling ending section 23 ends the packet sampling to the switch 10 to which it is detected from the statistic data that the increment of the transfer packets underruns the setting threshold value.

The storm determining section 24 determines from the result of the packet sampling, whether or not the condition is in either of the broadcast storm, the multicast storm and the unicast storm.

The storm detection section 25 determines that the sampled packet is the cause of the traffic storm when the condition is in either of the broadcast storm, the multicast storm, or the unicast storm.

### (Summary)

As mentioned above, the present invention drops the cause packet in a flow unit and does not carry out the drop of the indiscriminate packet and the down of a port itself, when the traffic storm occurs in the open flow network.

The controller detects increase of the traffic in a short time from the statistic data regularly acquired of the individual switch under the control. The controller starts the storm detection mode when detecting the increase of the traffic. In the storm detection mode, a packet (a sample packet) randomly is extracted from the switch for a predetermined period. The controller determines from this sample packet, that an enormous amount of packets transferred by the switches is the broadcast storm, the multicast storm, or the unicast storm. The controller sets the entry in which the packet data which causes the storm, and an action by which the packet is dropped are defined from information of the analyzed sample packet for a port of the switch by the "FlowMod" message, when the packet is the traffic storm.

In the present invention, there is no influence to the packets which are normally transferred without forming a loop by the open flow control even in the loop environment, by maintaining UP state (connection condition) of the port.

Therefore, the drop of the packet as a cause is possible by utilizing the open flow property without losing the open flow property. Moreover, when implementing the present invention, there is not a device to be added and it can be carried out in the existing open flow environment.

### (Supplemental notes)

A part or all of the above-mentioned exemplary embodiments can be described like the following supplemental notes. However, actually, the present invention is not limited to the following mention examples.

### (Supplemental note 1)

A controller includes a section for monitoring a switch which transfers a packet based on an entry registered on a flow table and carrying out packet sampling to the switch, and a section for setting a drop entry in which a match condition specifying a packet and an action of dropping the packet are defined to the switch when it is determined that the sampled packet is a cause of the traffic storm, as a result of the packet sampling to the switch, and controlling to drop the cause packet in a flow unit based on the drop entry when a traffic storm occurs on the switch.

The exemplary embodiments of the present invention have been described in detail, but actually, the present invention is not limited to the above-mentioned exemplary embodiments, and modifications which do not deviate from the scope of the present invention are contained in the present invention.

It should be noted that the present application claims a priority based on Japanese Patent Application No. 2010-242248, and the disclosure thereof is incorporated herein by reference.

## Claims

1. A network system comprising:
a switch configured to transfer a packet based on an entry registered on a flow table therein; and
a controller configured to set to said switch, a drop entry defining a match condition to specify the packet and an action to drop the packet, when it is determined that a sampled packet is a cause of a traffic storm, as a result of packet sampling to said switch,
wherein said switch drops the packet as the cause in a flow unit based on the drop entry when the traffic storm has occurred.

2. The network system according to claim 1, wherein said controller comprises:
means for regularly acquiring statistic data of a transfer packet from said switch;
means for starting the packet sampling to said switch if a predetermined time passes away from an end of the packet sampling in the last time, when it is detected from the statistic data that an increment of the transfer packets exceeds a setting threshold value; and
means for ending the packet sampling to said switch, when it is detected from the statistic data that the increment of the transfer packets falls below the setting threshold value.

3. The network system according to claim 1 or 2, wherein said controller comprises:
means for determining from the result of the packet sampling that a network condition is in either of a broadcast storm, a multicast storm, or a unicast storms; and
means for determining that the sampled packet is the cause of a traffic storm in case of either of the broadcast storm, the multicast storm, or the unicast storm.

4. The controller which is used in the network system according to any of claims 1 to 3.

5. A communication traffic controlling method comprising:
transferring packets by a switch based on an entry registered on a flow table therein;
setting by a controller to said switch, a drop entry defining a match condition to specify the packet and an action to drop the packet, when it is determined that a sampled packet is a cause of a traffic storm, as a result of packet sampling to said switch; and
dropping, by the switch, the packet as the cause in a flow unit based on the drop entry when the traffic storm has occurred.

6. The communication traffic controlling method according to claim 5, further comprising:
regularly acquiring statistic data of a transfer packet from said switch by said controller;
starting the packet sampling to said switch if a predetermined time passes away from an end of the packet sampling in the last time in said controller, when it is detected from the statistic data that an increment of the transfer packets exceeds a setting threshold value; and
ending the packet sampling to said switch in said controller, when it is detected from the statistic data that the increment of the transfer packets falls below the setting threshold value.

7. The communication traffic controlling method according to claim 5 or 6, further comprising:
determining in said controller from the result of the packet sampling that a network condition is in either of a broadcast storm, a multicast storm, or a unicast storms; and
determining in said controller that the sampled packet is the cause of a traffic storm in case of either of the broadcast storm, the multicast storm, or the unicast storm.

8. A storage medium which stores a program to make a computer execute a process of the controller in the communication traffic controlling method according to any of claims 5 to 7.
